# EUROPEAN PATENT APPLICATION

(11) **EP 4 817 969 A1**
(43) Date of publication of application: **07.10.2026**
(21) Application number: 26168540.8
(22) Date of filing: 27.03.2026
(51) Int. Cl.: B60R 25/25

(54) **A SYSTEM TO UNLOCK AND SECURE A VEHICLE**

(30) Priority: 30.03.2025 IN 202541031413
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The present disclosure relates to a system and method for unlocking and securing a vehicle using multifactor authentication. The system comprises one or more biometric units configured to capture biometric data of a user, a memory unit for storing authentication data of authorized users, a processing unit, and a vehicle control unit. The processing unit is configured to validate the biometric data against stored authentication data and further require at least one additional authentication input, such as a password, PIN, wireless authentication signal from a registered mobile device, or a key fob signal. Upon successful authentication of both factors, the system enables the operation of vehicular components. In case of unsuccessful authentication of any factor, vehicle operation is prevented. The corresponding method ensures secure vehicle access by implementing multifactor authentication, enhancing security against unauthorized access.

## Description

### FIELD OF THE INVENTION

The present subject matter is related, in general to a vehicle, and more particularly, but not exclusively to a system and method for unlocking and securing a vehicle by authorized users of the vehicle.

### Background Of The Invention

Vehicles represent significant financial investments for individuals and businesses alike, often constituting one of their most valuable assets. In addition to their high monetary value, vehicles serve as essential tools for daily transportation, both for personal and professional use. As such, the protection and security of these vehicles are of paramount importance. The threat of vehicle theft remains one of the most pervasive concerns for vehicle owners, with unauthorized access or operation carrying potentially severe consequences. Beyond the risk of theft, the unauthorized operation of a vehicle by an individual who lacks proper authorization can result in a range of safety and security risks, including accidents, misuse, or illegal activities. Given these risks, vehicle security must be robust, effective, and capable of addressing the increasing complexity of modem vehicles.

In response to the increasing need for vehicle protection, various security practices and technologies have been developed over time. Traditionally, vehicle security relied on mechanical systems, such as locks, ignition keys, and steering wheel locks, to prevent unauthorized access and operation. However, as vehicles have become more advanced and integrated with digital technologies, these traditional methods have become insufficient in addressing the full spectrum of threats facing modem vehicles.

Today, vehicle security systems incorporate both physical and electronic components to restrict access to authorized users. Anti-theft devices (ATDs) remain a primary tool for vehicle protection, including geo-location-based tracking, alarm systems, and immobilizers. While these systems deter theft attempts or prevent unauthorized vehicle operation, they are not without drawbacks. Many modem vehicles are also equipped with keyless entry systems that use proximity-based authentication. Although these systems enhance convenience for authorized users, they introduce vulnerabilities, such as relay attacks, where criminals intercept and amplify signals from key fobs to gain unauthorized access.

Despite advancements in vehicle security, existing methods face significant challenges in preventing vehicle theft and unauthorized use. One of the major issues is the high occurrence of false-positive alarms in alarm-based anti-theft devices, which can lead to unnecessary lockouts, wasted law enforcement resources, and frustration for vehicle owners. Moreover, traditional key-based and proximity authentication systems provide no additional verification beyond possession of the key or fob, making them susceptible to theft, signal interception, and unauthorized use.

Criminals have also become increasingly adept at bypassing conventional security mechanisms, including alarm systems, immobilizers, and keyless entry systems. Relay attacks, for example, allow criminals to exploit the weaknesses of proximity-based authentication by capturing and amplifying signals from key fobs to gain unauthorized access. Furthermore, GPS-based tracking devices can be disabled or jammed, and immobilizers can be manipulated by skilled attackers, demonstrating the need for more robust security solutions.

While biometric access systems, such as facial recognition and fingerprint scanning, have been introduced in some vehicles, they also exhibit limitations. Environmental factors such as low-light conditions, wet weather, or even spoofing attempts using high-quality photographs or artificial fingerprints can compromise their reliability. These shortcomings make biometric authentication alone insufficient to provide comprehensive vehicle security.

To address these challenges, a multifactor authentication (MFA) approach enhances vehicle security by requiring multiple authentication factors before granting access. By combining biometric authentication with at least one additional authentication input-such as a password, PIN, wireless authentication signal from a registered mobile device, or a key fob signal-the risk of unauthorized access is significantly reduced. Even if one authentication method is compromised, the system remains secure by requiring an additional factor for verification.

The present invention provides a multifactor authentication-based vehicle security system that overcomes the vulnerabilities of existing security mechanisms. By integrating biometric authentication with an additional security factor, the system ensures that only fully authenticated users can operate the vehicle. This approach mitigates the risks associated with traditional key-based systems, relay attacks, and biometric authentication failures due to environmental conditions or spoofing techniques. Furthermore, the inclusion of multiple authentication factors enhances security while maintaining user convenience, making it a highly effective solution for modern vehicle protection.

Therefore, there is a clear and pressing need for a comprehensive security system that incorporates multifactor authentication to prevent unauthorized access and operation of vehicles. The present invention addresses the shortcomings of existing vehicle security technologies by implementing a robust authentication framework that significantly enhances vehicle protection in an increasingly complex threat landscape.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY

The following summary provides an overview of the present invention and is not intended to be limiting. While the embodiments, aspects, and features described herein illustrate the invention's key functionalities, additional enhancements and variations will become apparent from the accompanying drawings and detailed description.

The present invention relates to a multifactor authentication-based system for unlocking and securing a vehicle. The system integrates one or more biometric units, a memory unit for storing authorized user data, a vehicle control unit to regulate vehicle operations, and a processing unit that interconnects these components. The biometric units capture user-specific data when an individual attempts to operate the vehicle. The processing unit validates the received biometric data against stored authorized user profiles. If authentication is successful, the system permits vehicle operation. Otherwise, the system restricts access, thereby preventing unauthorized use.

Another key feature of the invention includes real-time detection of unauthorized vehicle movement. Upon identifying an unauthorized attempt to access or operate the vehicle, the processing unit transmits an alert to designated devices, notifying the owner or other authorized personnel.

The alerting mechanism includes multiple output devices such as a display unit, audio alarms, illumination signals, and notifications to a personal device (e.g., a smartphone), ensuring rapid awareness of unauthorized access attempts.

The invention further incorporates an additional security layer through remote authorization. Upon detecting a user's attempt to operate the vehicle, the system transmits an authorization request to the registered personal device of the owner. The vehicle remains in a locked state until the owner grants access via the personal device. If the request is denied, the system signals the vehicle control unit to prevent any operation.

In the event of unauthorized access, the system captures and transmits critical information, including vehicle location, movement history, and image data, to the owner's device for real-time situational awareness.

Additionally, the system transmits vehicle security data to a remote analysis unit for record-keeping and further security analysis, enhancing tracking capabilities in case of theft or attempted breaches.

The biometric authentication framework includes multiple security modalities such as fingerprint recognition, voice authentication, facial recognition, and iris scanning, ensuring a comprehensive and highly secure authentication process.

The memory unit is designed to store multiple biometric profiles per user, allowing for redundant authentication methods and seamless access management for multiple authorized individuals.

The invention further outlines a method for operating the vehicle, which involves capturing biometric data, validating it against stored profiles, and transmitting commands to the vehicle control unit based on authentication results. Successful authentication grants access, whereas failure triggers security protocols to block vehicle operation.

Unauthorized vehicle movement is detected in real time, with immediate alert transmissions to designated devices to ensure prompt intervention.

The alert system is designed to provide warnings via multiple output devices, including visual displays, audio signals, and mobile notifications, reinforcing security awareness.

Remote authorization functionality ensures that vehicle access remains under owner control by transmitting access requests to the registered personal device. Granting or denying access via this device determines whether the vehicle remains locked or is operable.

The system enhances security by transmitting real-time data, including vehicle location, movement logs, and image evidence, to the owner's personal device, aiding in theft prevention and incident tracking.

Further, security logs are transmitted to a remote analysis unit for monitoring and record-keeping, improving security oversight and forensic tracking.

The invention ensures robust authentication through multiple biometric options, including fingerprint scanning, voice recognition, facial detection, and iris scanning, providing secure and adaptable user verification.

The memory unit's capability to store multiple biometric profiles per user allows for greater authentication flexibility and convenience without compromising security.

Finally, the invention includes a non-transitory computer-readable medium containing instructions to execute the described authentication and security processes, ensuring seamless operation through electronic control systems.

### BRIEF DESCRIPTION OF THE DRAWINGS

The present invention will become more fully understood from the detailed description given herein below and the accompanying drawings which are given by way of illustration only and thus are not limitative of the present invention.
**Figure 1** shows a block diagram illustrative of one or more components of the vehicle incorporating the invention, in accordance with some embodiments of the present disclosure.
**Figure 2** illustrates a method for unlocking and securing the vehicle, in accordance with some other embodiments of the invention.
**Figure 3** exemplarily illustrates a process flow of the system for unlocking and securing a vehicle, in accordance with some other embodiments of the invention.

### DETAILED DESCRIPTION OF THE DRAWINGS

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the system may extend beyond the described embodiments. For example, the teachings presented, and the needs of a particular application may yield multiple alternative and suitable approaches to implement the functionality of any detail described herein. Therefore, any approach may extend beyond the particular implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

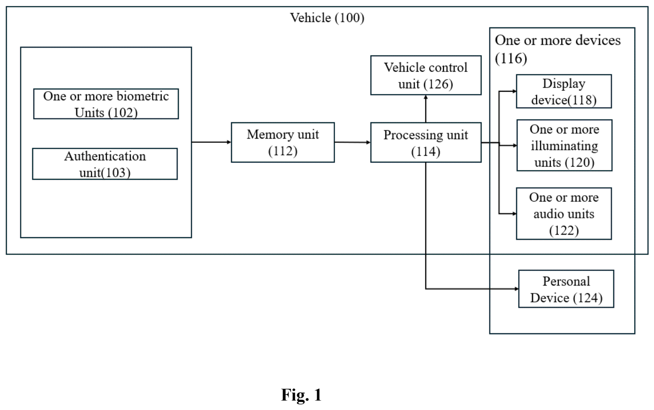

**Figure 1** shows a block diagram illustrative of one or more components of the vehicle 100 incorporating the invention, in accordance with some embodiments of the present disclosure.

With reference to Figure 1, the system includes a vehicle 100, one or more biometric units 102, a vehicle control unit 126, a memory unit 112, and a processing unit 114. According to embodiments of the present invention, the automobile may be of any category such as, but not limited to, a three-wheeled road vehicle, a four-wheeled road vehicle, a bus, a truck, a locomotive, and so forth. Embodiments of the present invention are intended to include or otherwise cover any category of the vehicle, including known, related art, and/or later developed technologies.

In an embodiment of the present invention, the one or more biometric units 102 are disposed within the vehicle 100 and configured to capture biometric data from a user attempting to operate the vehicle 100. These biometric units 102 may include, but are not limited to, a fingerprint sensing unit 104, a Image capturing unit 106, an voice recognition unit 108, and an iris capturing unit 110. The placement of the biometric units 102 within the vehicle is strategic to ensure ease of access for the user while preventing tampering or unauthorized access to the units themselves. For example, a fingerprint sensor may be integrated into the steering wheel or ignition button, a camera for facial recognition may be positioned on the dashboard, and a voice recognition system may utilize microphones integrated into the vehicle's audio system.

The fingerprint sensing unit 104 may utilize capacitive, optical, or ultrasonic fingerprint sensors to capture the fingerprint of the user. The voice recognition unit 108 may employ speech recognition algorithms to analyze the user's voice and identify the speaker. The image capturing unit 106 may use a digital camera or infrared camera to capture facial features of the user. The iris capturing unit 110 may use an infrared camera and specialized algorithms to capture the unique patterns of the user's iris.

In an embodiment of the invention, the memory unit 112 is configured to store biometric data of a pre-defined set of authorized users. The memory unit 112 can be any form of non-volatile storage, such as flash memory or a hard drive, and may be integrated within the processing unit or exist as a separate component. The biometric data stored in the memory unit 112 comprises biometric profiles of authorized users.

In an embodiment of the present invention, the system (100) further comprises an authentication unit (103) configured to facilitate multifactor authentication for unlocking and securing the vehicle (100). The authentication unit (103) is communicatively connected to the processing unit (114) and is configured to receive, store, and verify additional authentication inputs beyond biometric data.

The additional authentication inputs may include, but are not limited to, a password or PIN entered by the user, a wireless authentication signal received from a registered mobile device (130), or a key fob signal (132). The authentication unit (103) is further configured to validate these authentication inputs against pre-stored authentication data in the memory unit (112).

The registered mobile device (130) may communicate with the authentication unit (103) via Bluetooth, Near Field Communication (NFC), or other wireless communication protocols. The key fob (132) may generate and transmit an encrypted signal to the authentication unit (103) for authentication. The password or PIN may be entered through an input interface integrated into the vehicle's dashboard, touchscreen, or other control panels.

In an embodiment of the present invention, the authentication unit (103) ensures that access to the vehicle (100) is granted only upon successful authentication of both biometric data and at least one additional authentication factor. If either authentication factor fails authentication, the system (100) prevents the operation of one or more vehicular components, thereby enhancing security and mitigating unauthorized access.

In an embodiment of the present invention, the processing unit 114 is communicatively connected to the one or more biometric units 102 and one or more authentication unit 103, the vehicle control unit 126, and the memory unit 112. The processing unit 114 may include, but is not limited to, a Programmable Logic Controller (PLC), a microprocessor, a Central Processing Unit (CPU), a development board, a Field-Programmable Gate Array (FPGA), an Application-Specific Integrated Circuit (ASIC), or any combination thereof. The processing unit may be a microcontroller, a microprocessor, or any other suitable computing device capable of executing instructions and performing data processing. The communicative connection between the processing unit 114 and one or more biometric units 102, the vehicle control unit 126, and the memory unit 112 can be wired (e.g., via USB, Ethernet) or wireless (e.g. Bluetooth, Wi-Fi). The wireless communication may use any of a plurality of communication standards, protocols and technologies, such as Global System for Mobile Communications (GSM), Enhanced Data GSM Environment (EDGE), wideband code division 10 multiple access (W-CDMA), code division multiple access (CDMA), time division multiple access (TDMA), Bluetooth, Wireless Fidelity (Wi-Fi) (e,g., IEEE 802.11a, IEEE 802.11b, IEEE 802.11g and/or IEEE 802.11n), voice over Internet Protocol (VoIP), Wi-MAX.

In an embodiment of the present invention, the processing unit 114 comprises multiple integrated sub-units designed to perform a variety of functions essential for operating one or more components of the vehicle 100. These sub-units operate in concert to receive, analyze, and process one or more bio-metric data and authentication data as well as to execute appropriate actions based on the results of this analysis. The processing unit 100 may include, but is not limited to, sub-units for input handling, feature extraction, data comparison, decision-making, and alert generation.

In an embodiment of the present invention, when a user attempts to operate the vehicle (100), the one or more biometric units (102) capture the user's biometric data, and the authentication unit (103) receives at least one additional authentication input. The captured biometric data and additional authentication input are then transmitted to the processing unit (114). The processing unit (114) compares and validates both the biometric data and the additional authentication input against the authentication data of the pre-defined set of authorized users stored in the memory unit (112).

The authentication process involves verifying the captured biometric data and additional authentication input with the stored authentication profiles. This process may employ advanced algorithms and statistical analysis to ensure accurate and secure authentication. For example, fingerprint data may be verified using minutiae matching, voice data may be analyzed using spectral analysis, facial features may be compared using feature extraction techniques, and iris patterns may be analyzed using pattern recognition algorithms. Additionally, passwords or PINs may be validated through cryptographic hashing, wireless authentication signals from a registered mobile device (130) may be verified using encrypted communication protocols, and key fob signals (132) may be authenticated using rolling code algorithms.

Upon successful authentication of the biometric data and the authentication data, the processing unit 114 transmits a signal to vehicle control unit 126 to allow the operation of one or more vehicular components. These vehicular components may include, but are not limited to, the engine ignition system, the door locking system, the steering system, and the infotainment system. Operating these components allows the authorized user to start the engine, unlock the doors, control the vehicle 100, and use the vehicle's features.

In the event of an unsuccessful authentication of the biometric data and authentication data, the processing unit 114 transmits a signal to vehicle control unit 126 to disallow the operation of one or more vehicular components and transmits an output to one or more devices 116 indicative of a warning alert. This warning alert serves to notify the user and potentially others that an unauthorized attempt to operate the vehicle 100 has occurred. The vehicular components may include, but are not limited to, the engine ignition system, the door locking system, the steering system, and the infotainment system. Disallowing the operation of these components prevents the unauthorized user to start the engine, unlock the doors, control the vehicle 100, and use the vehicle's features.

In an embodiment of the present invention, the authentication process includes transmitting an authorization request to the user's personal device 124, and upon receiving approval, the vehicle can be operated. The system can send an authorization request to the user via a mobile app, voice assistant, or SMS. The user can approve or deny access through biometric authentication, PIN, QR code scan, or Bluetooth pairing. Additional methods include web portals, OTPs, social media verification, or proximity-based authorization.

In an embodiment of the present invention, the processing unit 114 sends an output to personal device of the user. The output includes at least a vehicle location, a movement history, and an image data. The vehicle location is indicative of the geographical location where the unauthorized attempt to access vehicle occurred, the movement history depicts the details of vehicle movement such as duration and the image data includes the captured image of the unauthorized user captured by the image capturing unit 106 disposed in the vehicle.

In another embodiment of the present invention, the output data is sent to a remote analysis unit for further processing and record keeping purpose. The remote analysis unit includes but is not limited to servers, cloud-based analytics platforms, edge computing servers, data warehouses, virtual machines, and serverless computing environments for processing.

In an embodiment of the present invention, the memory unit 112 is configured to store multiple biometric profiles for each authorized user. This allows for greater flexibility and redundancy in the authentication process. For example, a user may have multiple fingerprint profiles (e.g., from different fingers), multiple voice samples, and multiple facial images stored in the memory unit. This ensures that the system can still authenticate the user even if one form of biometric data is compromised or unavailable.

The one or more devices 116 that receive the warning alert may include a display device 118, one or more illuminating devices 120, one or more audio units 122, and a personal device 124 of the user. The display device 118 may display a message indicating that the authentication has failed. The illuminating devices 120 may flash the headlights or other lights to attract attention. The audio units 122 may emit an audible alarm. The personal device 124 of the user may receive a notification via a mobile app or SMS message.

The display device 118 may include the instrument cluster, head-up displays (HUD), infotainment displays, navigation displays, rear-view camera displays, rear seat entertainment displays, climate control displays, digital rearview mirrors, instrument panel displays, side mirror displays, and any other screens located within the viewing range of the vehicle user. In a preferred embodiment, the display device 118 is an instrument cluster of the vehicle 100. In another embodiment, the display device 118 is a negative Liquid Crystal Display (LCD) type display with high contrast resulting in higher readability in certain conditions such as in bright sunlight, and in low-light conditions.

The one or more illuminating devices 120 may include head lamps, tail lamps, turn signal lamps, hazard lamps, fog lamps, cabin lights, instrument cluster lights, telltale indicators, displays, screens, and any source of light within the viewing range of the vehicle user.

The one or more audio units 122 of the vehicle 100 may include a vehicle audio system, a horn, a beeping device, any other device in the vehicle capable of producing an output in sound. The one or more audio unit 122, upon receiving the output from the processing unit 114, output a warning alert which may be audibly heard by the vehicle user. The warning alert may be a beeping noise, a buzzing noise, a warning message, a sharp sound, or any other noise capable of catching the attention of a vehicle user.

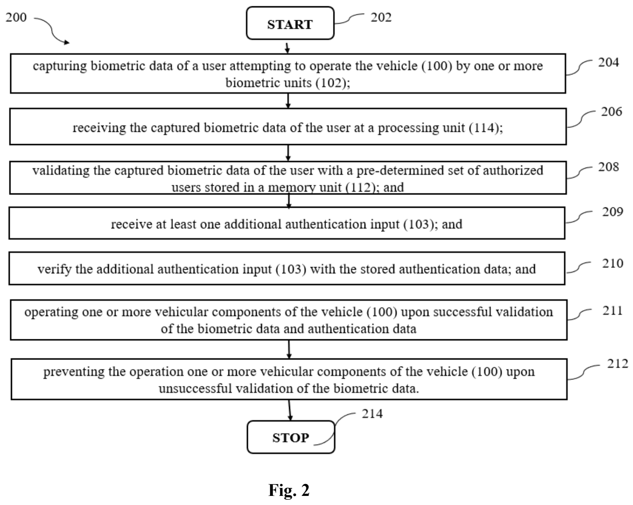

**Figure 2** illustrates a method 200 for unlocking and securing a vehicle 100 based on biometric authentication, in accordance with some embodiments of the invention.

With reference to Figure 2, the method 200 begins at step 202 and proceeds to step 204. At step 204, the method involves capturing biometric data of a user attempting to operate the vehicle 100. One or more biometric units 102 disposed in the vehicle 100, such as fingerprint sensing units, image capturing units, voice recognition units, or iris capturing units, are used to capture data from the user. The method 200 then proceeds to step 206.

At step 206, the method 200 comprises receiving the captured biometric data at a processing unit 114. The biometric data is sent from one or more biometric units 102 to the processing unit 114 for authentication. This captured data is then compared to stored biometric profiles of authorized users, which are kept in a memory unit 112. The method then advances to step 208.

At step 208, the method 200 involves validating the captured biometric data with the pre-determined set of authorized users stored in the memory unit 112. The processing unit 114 compares the received biometric data with the stored profiles, employing algorithms and statistical techniques to ensure that the user is authorized to operate the vehicle. If authentication is successful, the method 200 proceeds to step 209.

At step 209, the method (200) comprises initiating the multifactor authentication process upon successful authentication of the biometric data. Once the user's biometric data is validated, the processing unit (114) transmits a request to the authentication unit (103) to receive at least one additional authentication input. The additional authentication input may include a password or PIN entered via an input interface, a wireless authentication signal from a registered mobile device (130), or a key fob signal (132).

At step 210, the received authentication input is then verified against stored authentication data in the memory unit (112). If both the biometric authentication and the additional authentication input are successfully validated, the processing unit (114) transmits an output signal to the vehicle control unit (126) to operate one or more vehicular components, such as the engine ignition system, the door locking system, the steering system, and the infotainment system. This ensures that only an authenticated user can start the engine, unlock the doors, control the vehicle (100), and use the vehicle's features. The method (200) then ends at step (214).

At step 211, method 200 comprises operating one or more vehicular components upon successful authentication of the biometric data. Once the user is validated, the method 200 proceeds to step 209.

At step 212, the method 200 comprises preventing the operation of one or more vehicular components based on unsuccessful authentication of the biometric data of the user. Upon unsuccessful authentication, the processing unit 114 transmits an output signal to vehicle control unit 126 to disallow the operation of one or more vehicular components, such as the engine ignition system, the door locking system, the steering system, and the infotainment system. This prevents the unauthorized user from starting the engine, unlocking the doors, controlling the vehicle 100, and using the vehicle's features. The method 200 then stops at step 214.

In one embodiment of the present invention, if the biometric data fails authentication, the method 200 further includes a step, which involves transmitting an output to one or more devices 116 by processing unit 114. These devices could include a display device 118, one or more illuminating devices 120, one or more audio units 122, and a personal device 124 of the user. This warning alert indicates that the authentication attempt was unsuccessful, notifying the user and potentially others of the unauthorized attempt.

In one embodiment, the method further comprises initiating an authorization request to personal device 124 of the user upon unsuccessful authentication of biometric data. The vehicle 100 is prevented from being operated while the system pursues an alternate authentication.

The method 200 further involves transmitting an authorization request to the personal device 124 of the user in case of a failed biometric authentication. Upon receiving the approval from the user's personal device 124, the processing unit 114 sends a output signal to vehicle control unit 126 to operate one or more vehicular components, such as the engine ignition system, the door locking system, the steering system, and the infotainment system. Upon denial of authorization request, the processing unit 114 sends a output signal to vehicle control unit 126 to prevent the operation one or more vehicular components, such as the engine ignition system, the door locking system, the steering system, and the infotainment system.

In one embodiment of the present invention, the method 200 further comprises a step of transmitting an output to the personal device 124 of the user. The output includes at least a vehicle location, a movement history, and an image data. The vehicle location is indicative of the geographical location where the unauthorized attempt to access vehicle occurred, the movement history depicts the details of vehicle movement such as duration and the image data includes the captured image of the unauthorized user captured by the image capturing unit 106 disposed in the vehicle.

In another embodiment of the present invention, the method 200 further involves a step of transmitting an output data to a remote analysis unit for further processing and record keeping purpose. The remote analysis unit includes but is not limited to servers, cloud-based analytics platforms, edge computing servers, data warehouses, virtual machines, and serverless computing environments for processing.

In one embodiment of the present invention, the one or more devices 116 include, but are not limited to, a display device 118, one or more illuminating devices 120, one or more audio units 122, and a personal device 124. The display device 118 may show an alert message indicating the failed authentication, while the illuminating devices 120 may flash the vehicle's lights to attract attention. The audio units 122 may emit a beeping or alarm sound, and the personal device 124 may receive an SMS or mobile app notification indicating the failed authentication attempt.

In another embodiment, the memory unit 112 is configured to store multiple biometric profiles for each authorized user, allowing greater flexibility in the authentication process. For example, each user may have several biometric profiles, including multiple fingerprint profiles, voice samples, facial images, or iris patterns, stored to ensure that the system can still authenticate the user even if one biometric modality is unavailable or compromised.

The above-described method provides a solution for biometric authentication in vehicles, ensuring that only authorized users can operate the vehicle while enhancing convenience and securing the vehicle.

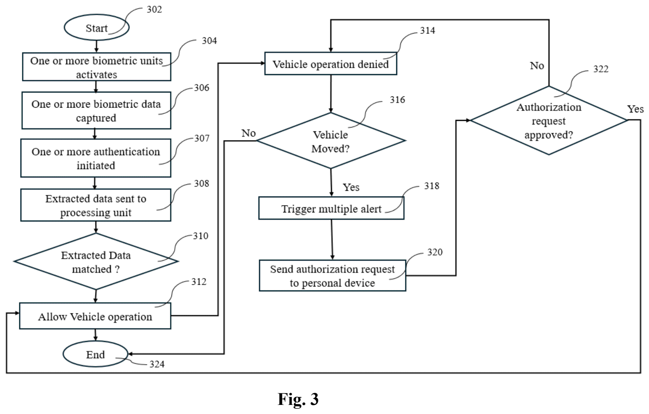

Figure 3 illustrates a process flow for operating a vehicle based on biometric authentication

With reference to Figure 3, the process flow 300 begins at step 302 and proceeds to step 304.

At step 304, one or more biometric units 102 disposed in the vehicle 100 activates to capture the biometric data of the user trying to unlock and operate the vehicle. The process flow 300 proceeds to step 306.

At step 306, one or more biometric units 102 disposed in the vehicle 100 capture one or more biometric data of the user attempting to operate the vehicle 100. The biometric data may include fingerprint data, voice data, facial features, or iris patterns, depending on the selected biometric authentication method. The one or more biometric units 102 are strategically positioned within the vehicle 100 for convenient capture of the user's biometric information.

The process flow (300) proceeds to step 307, where the authentication unit (103) prompts the user to provide at least one additional authentication input. The additional authentication input may include a password or PIN entered via an input interface, a wireless authentication signal from a registered mobile device (130), or a key fob signal (132). The process then continues with authentication of both biometric data and the additional authentication input to ensure secure access. The process flow 300 then proceeds to step 308.

At step 316, the processing unit 114 receives the captured biometric data of the user from the one or more biometric units 102 to validate the biometric data of the user with biometric data of a pre-defined set of authorized users stored in a memory unit 112. The processing unit 114 accesses the memory unit 112 and compares the captured biometric data with the stored biometric profiles. The process flow 300 then proceeds to step 310.

At step 310, the processing unit 114 compares the extracted biometric data with the data stored in the memory unit 112 to check if the extracted data matched with the pre stored biometric data. This authentication process may involve complex algorithms and statistical analysis to ensure accurate and reliable authentication. The process flow 300 branches to either step 312 or step 314 based on the outcome of the authentication.

The authentication unit (103) prompts the user to provide an additional authentication input, which may include a password or PIN entered via an input interface, a wireless authentication signal from a registered mobile device (130) via Bluetooth, NFC, or another secure communication protocol, a key fob signal (132) transmitted to the vehicle for authentication.

The processing unit (114) receives and verifies the additional authentication input against stored authentication data in the memory unit (112).

At step 312, if the authentication is successful, the processing unit 114 sends an output signal to vehicle control unit 126 to allow the operation of one or more vehicular components of the vehicle 100. The vehicular components may include the engine ignition system, the door locking system, the steering system, and the infotainment system. Operating these components allows the authorized user to start the engine, unlock the doors, control the vehicle, and use the vehicle's. The process ends at step 324.

At step 314, if the authentication is unsuccessful, the processing unit 114 sends an output signal to vehicle control unit 126 to disallow the operation of one or more vehicular components of the vehicle 100. The vehicular components may include the engine ignition system, the door locking system, the steering system, and the infotainment system. Disallowing operation of these components prevents the authorized user to start the engine, unlock the doors, control the vehicle, and use the vehicle's. The process ends at step 316.

At step 316, The processing unit 114 further checks if the vehicle 100 is moved after unsuccessful authentication of the user. The process flow 300 branches to either step 324 or step 318 based on the outcome of the step 316.

At step 324, if the vehicle 100 is not moved upon unsuccessful authentication of the user, The process flow ends at step 324.

At step 318, If the vehicle 100 is moved, the processing unit 114 transmits an output to one or more devices 116 indicative of a warning alert. This warning alert serves to notify the user and potentially others about an unauthorized attempt to operate the vehicle 100. The process flow 300 proceeds to step 320.

At step 320, the processing unit 114 sends an authorization request to the personal device 124 of the user for further authentication. The process flow 300 proceeds to step 322.

At step 322, the processing unit 114 checks the status of the authorization request. The user can either approve or deny the request on the personal device 126. The process flow 300 branches to either step 312 or step 314 based on the outcome of authorization request.

At step 312, Upon receiving the approval from the user's personal device 124, the processing unit 114 allows the operation of one or more components of the vehicle without further authentication steps. The process flow 300 ends at 324.

At step 314, if the authorization request is declined from the user's personal device 124, the processing unit 114 disallows the user to operate the vehicle 100 and continues to follow the further steps for authentication. The process flow 300 then ends at 324.

At step 324, the process flow ends. The outcome of either successful operation of vehicular components or transmission of a warning alert concludes the process flow.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

The claimed invention provides a system and a method for unlocking and securing a vehicle using biometric authentication while ensuring accuracy, reliability, efficiency, customer comfort, and safety.

In light of the above-mentioned advantages and the technical advancements provided by the disclosed system and method, the claimed system and the undertaken method of operation as discussed above are not routine, conventional, or well understood in the art, as the claimed system and claimed method enable the following solutions to the existing problems in conventional technologies. The claimed system and constructional features provide a technical solution to a technical problem.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications. Those skilled in the art will appreciate that any of the aforementioned system modules may be suitably replaced, reordered, or removed, and additional steps and/or system modules may be inserted, depending on the needs of a particular application.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure is not limited to the particular embodiment disclosed, but that the present disclosure will include all embodiments falling within the scope of the appended claims.

### List of Reference Numerals

100: Vehicle
102: One or more biometric units
103: One or more authentication unit
104: Fingerprint sensing unit
106: Voice recognition unit
108: Image capturing unit
110: Iris capturing unit
112: Memory unit
114: Processing unit
116: One or more devices
118: Display device
120: One or more illuminating devices
122: One or more audio units
124: A personal device
126: Vehicle control unit

## Claims

1. A system for unlocking and securing a vehicle (100), the vehicle (100) comprising:
one or more biometric units (102), the one or more biometric units (102) being configured to capture biometric data of the user unlocking the vehicle (100);
a memory unit (112) configured to store biometric data of a pre-defined set of authorized users and authentication data;
a vehicle control unit (126) configured to control the operation of the vehicle (100); and
a processing unit (114) communicatively connected to the one or more biometric units (102), the memory unit (112) and the vehicle control unit (126), wherein the processing unit (114) is configured to:
receive the biometric data of the user from the one or more biometric units (102);
compare the biometric data received with the data stored in the memory unit (112);
validate the biometric data of the user with the stored biometric data in the memory unit (112);
receive at least one additional authentication input (103);
verify the additional authentication input (103) with the stored authentication data;
authenticate the user based on authentication of both the biometric data and the additional authentication input (103);
operating one or more vehicular components of the vehicle (100) upon authentication of the user; and
preventing the operation of the one or more vehicular components of the vehicle (100) upon unsuccessful authentication of the user.

2. The system as claimed in claim 1, wherein the at least one additional authentication input (103) includes at least one of a password, a PIN, a wireless authentication signal from a registered mobile device, or a key fob signal.

3. The system as claimed in claim 1, wherein said processing unit (114) being configured to upon movement of the vehicle by an unauthorized user, transmit an output to one or more devices (116) indicative of a warning alert,
wherein the one or more devices (116) comprise at least one of:
a display device (118);
one or more illuminating devices (120);
one or more audio units (122); and
a personal device (124) of the user.

4. The system as claimed in claim 1, wherein said processing unit (114) being configured to:
transmit an authorization request to the personal device (124) of the user upon unsuccessful authentication of the biometric data and authentication data;
enable operation of the vehicle upon receiving approval from the personal device (124) of the user; and
prevent the operation of vehicle upon not receiving approval from the personal device (124) of the user.

5. The system as claimed in claim 1, wherein the output to the personal device (124) of the user includes at least a vehicle location, a movement history, and an image data, from the processing unit (114), wherein said processing unit (114) being configured to transmit at least the vehicle location, the movement history, and the image data, to a remote analysis unit.

6. The system as claimed in claim 1, wherein one or more biometric units (102) comprises at least one of:
a fingerprint sensing unit (104);
a voice recognition unit (106);
an image capturing unit (108); and
an iris capturing unit (110).

7. The system as claimed in claim 1, wherein the memory unit (112) is configured to store multiple biometric profiles for each authorized user.

8. A method (200) for unlocking and securing a vehicle (100), the method (200) comprising:
capturing biometric data of a user attempting to operate the vehicle (100) by one or more biometric units (102) disposed on the vehicle (100);
receiving the captured biometric data of the user at a processing unit (114);
validating the captured biometric data of the user with a pre-determined set of authorized users stored in a memory unit (112);
receiving at least one additional authentication input (103) at the processing unit (114), the additional authentication input (103) being selected from a password, a PIN, a wireless authentication signal from a registered mobile device (130), or a key fob signal (132);
verifying the additional authentication input (103) with authentication data stored in the memory unit (112);
authenticating the user based on authentication of both the biometric data and the additional authentication input (103);
operating one or more vehicular components of the vehicle (100) upon authentication of the biometric data; and
preventing the operation of one or more vehicular components of the vehicle (100) upon unsuccessful authentication of the biometric data and additional authentication data.

9. The method as claimed in claim 8, wherein the at least one additional authentication input (103) includes one of a password, a PIN, a wireless authentication signal from a registered mobile device, or a key fob signal.

10. The method (200) as claimed in claim 8, comprising a step of transmitting an output to one or more devices (116) indicative of a warning alert upon movement of the vehicle by an unauthorized user,
wherein the one or more devices (116) comprise at least one of:
a display device (118);
one or more illuminating devices (120);
one or more audio units (122); and
a personal device (124) of the user.

11. The method as claimed in claim 8, the method further comprising;
transmitting an authorization request to the personal device (124) of the user upon unsuccessful authentication of the biometric data and authentication data;
enabling operation of the vehicle upon receiving approval from the
personal device (124) of the user; and
preventing the operation of vehicle upon not receiving approval
from the personal device (124) of the user.

12. The method as claimed in claim 8, wherein the output to the personal device (124) of the user includes at least a vehicle location, a movement history, and an image data, from the processing unit (114), wherein said processing unit (114) being configured to transmit the at least the vehicle location, the movement history, and the image data, to a remote analysis unit.

13. The method of claim 8, wherein data acquisition unit (102) comprises at least one of:
a fingerprint sensing unit (104);
a voice recognition unit (106);
an image capturing unit (108); and
an iris capturing unit (110).

14. The method as claimed in claim 8, wherein the memory unit (112) is configured to store multiple biometric profiles for each authorized user.

15. A non-transitory computer-readable medium storing instructions that, when executed by a processor, cause the processor to perform the method of claim 7.
